# EUROPEAN PATENT SPECIFICATION

(11) **EP 1 857 308 B1**
(45) Date of publication and mention of the grant of the patent: **16.06.2010**
(21) Application number: 07108212.7
(22) Date of filing: 15.05.2007
(51) Int. Cl.: B60H 1/00

(54) **Air guiding rib in blower outlet**
Luftführende Rippe in einem Gebläseauslass
Nervure de guidage à air pour la sortie d'un ventilateur

(30) Priority: 18.05.2006 DE 102006023448
(43) Date of publication of application: 21.11.2007
(73) Proprietor: Valeo Klimasysteme GmbH, 96476 Rodach (DE)
(72) Inventor: Weber, Jens, 96515 Sonnenberg (DE); Schwab, Steffen, 98553 Sleusingen (DE); Urban, Reinhard, 98530 Dietshausen (DE)
(74) Representative: Léveillé, Christophe

(56) References cited:
- DE-A1-102005 030 884
- DE-U1- 8 516 718
- JP-A- 59 199 315

## Description

The invention relates to a blower / heater combination for a heating, ventilation and air conditioning unit in vehicles, with a spirally shaped blower duct and a housing, which accommodates the heater and, especially, an evaporator and is connected with the outlet of the blower duct by a diffuser duct, which expands in the direction of the housing, the average flow direction in the diffuser duct forming an acute angle with the air inlet surface of the heater and the heater having blades, plates or flat tubes.

Document JP 59 199 315, which is considered as the closest prior art, discloses such a blower/heater combination.

With such blower / heater combinations, hissing noises may arise if the air, emerging from the spirally shaped blower duct, strikes the baffles / blades of the heater at an angle of less than about 40° with the air inlet surface. These noises are in a narrow frequency range of, for example, 3 to 3.5 kHz and are regarded as unpleasant. In order to avoid such interfering noises, the blower may be arranged relative to the heater in such a manner, that the incident angle is greater than 40°. However, if disposed in the usual manner in the vehicle, this means that the dimensions of the combination in the longitudinal direction of the vehicle become greater. Since this is frequently not acceptable, the arrangement of a homogenizing grate in front of the air inlet surface of the heater has already been considered. By means of such a great, the inflowing air is distributed more uniformly over the air inlet surface and the air entry angle is increased to values above 40° to about 90°. However, the use of such a homogenizing grate is associated with flow losses and the overall size of the combination increases as does its complexity and its manufacturing costs.

With the present invention, the problem of interfering noises is solved by a particularly simple measure. Pursuant to the invention, a guiding fin is arranged in the outlet of the blower duct. This guiding fin provides the air flow, directed on to the air inlet surface of the heater, with a component with, in comparison to the acute angle, a larger incident angle with respect to the inlet surface of the heater. Furthermore, according to the invention, the direction of the air inlet surface of the heater crosses the spirally shaped blower duct. By means of a suitable arrangement of a simple guide fin in the outlet of the blower duct, the direction of flow in the critical region can be diverted selectively to larger angles by a simple guiding fin, which does not cause any noticeable flow losses. Surprisingly, the interfering noise ranging, for example, from 3 to 3.5 kHz and up to 10 dB, can be reduced with this simple measure. A reduction in the noise level is also observed in lower frequency ranges. The success of the inventive measure is all the more surprising since, in the field of blower technology, the principle applies that any unnecessary deflection of the flow is to be avoided, since it causes flow losses and interfering noises.

Preferably, the guiding fin is disposed in a region of the outlet of the blower duct, in which the flow direction upstream from the guiding fin forms an angle of less than about 40° with the inlet surface of the heater. The air stream is provided by the guiding fin with a component with an incident angle to the air inlet surface of the heater, which preferably ranges from 40° to 90°. An incident angle ranging from 50° to 70° is particularly effective.

In a particularly a preferred embodiment, the guiding fin is arranged at such a distance "a" from the outer and "b" from the inner boundary wall at the outlet of the blower duct, that the ratio a/b is between 1 and 5 and preferably between 1.5 and 2.5.

The shape of the guiding fin is not critical. However, an execution with rounded incident edges, the rounded edges having a radius ranging from 1 to 6 mm and preferably from 2 to 4 mm, is appropriate. Flow losses are minimized, if the guiding fin has a drop-shaped profile.

The guiding fin can be integrated with little expense in existing designs. In particular, the guiding fin may be integrally moulded on the wall of the blower duct. In the case of a blower duct, assembled from two housing parts, the guiding fin is preferably assembled from two parts, to each of which one of the two housing parts is integrally moulded.

Further distinguishing features and advantages of the invention arise out of the following description and the enclosed drawings, in which
Figure 1 illustrates a schematic representation of a blower / heater combination,
Figure 2 illustrates a detailed representation of an evaporator,
Figure 3 illustrates a schematic representation an enlarged section of the arrangement according to Figure 1
Figure 4 illustrates a sectional view of the blower / heater combination along the line IV-IV in Figure 3 and
Figure 5 shows an enlarged detailed representation of the construction of a guiding fin.

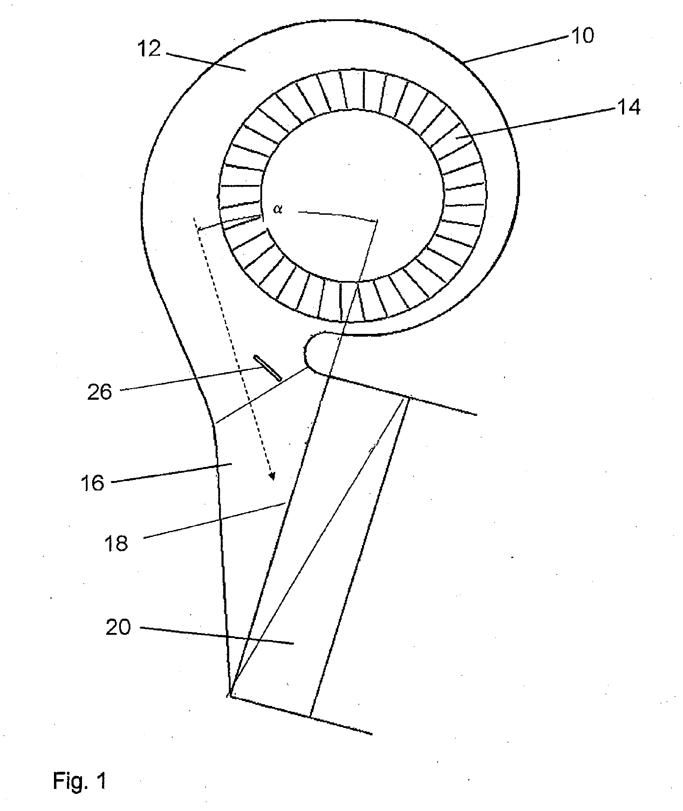

The blower / heater combination, illustrated schematically in Figure 1, is a component of a heating, ventilation and air conditioning unit in vehicles. The blower is a radial blower, with a spirally shaped blower duct 12, formed in a housing 10, and a blower button 14. A diffuser duct 16, which expands in the direction of the inlet surface 18 of a heater 20, is connected to the outlet of the blower duct 12. The heater 20 is an evaporator. The housing 10 may be constructed continuously up to the heater 20 and beyond and accommodate further components of the system other than the heater 20.

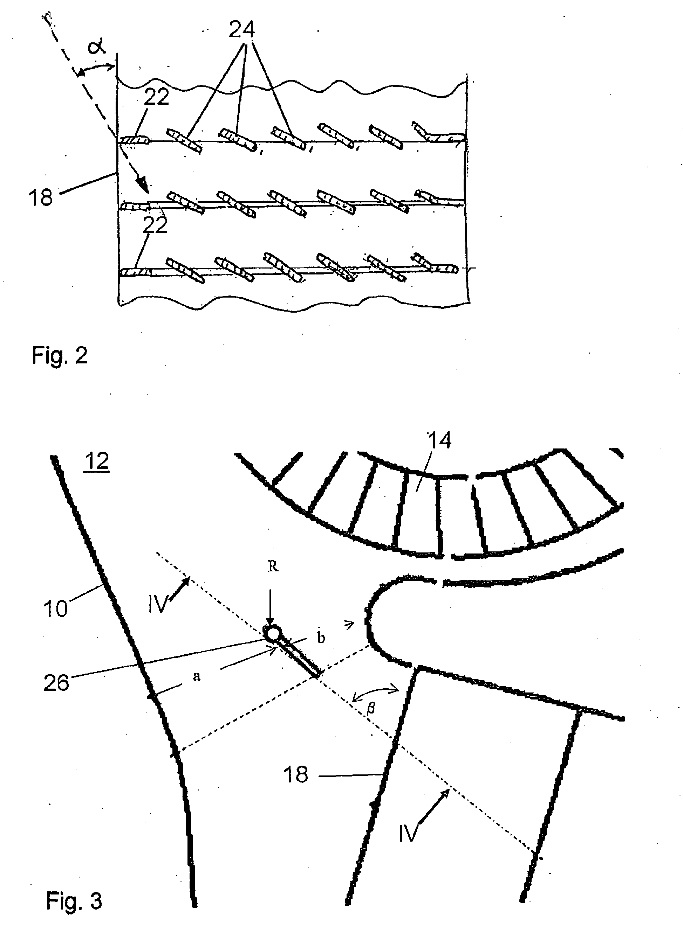

The average flow direction at the outlet of the blower duct 12, indicated in Figure 1 by an arrow of broken lines, forms an angle α, which, in the selected blower and heater arrangement, is about 40°, with the air inlet surface 18 of the heater 20. As already mentioned, the heater 20 is an evaporator, details of which are shown in Figure 2. Such an evaporator typically has baffles 22, which are arranged behind the air inlet surface 18 perpendicular to this surface, and are followed by blades 24. With such an arrangement and an incident angle α, of 40° or less, whistling interfering noises occur, for example, ranging from 3 to 3.5 kHz. Narrow band, interfering noises in this frequency range are considered to be unpleasant.

Pursuant to the invention, a guiding fin 26 is arranged at the outlet of the blower duct 12. The guiding fin 26 is arranged at an angle β with respect to the air inlet surface 18 of the heater 20, the angle β being significantly greater than the angle α, and up to 90°. In principle, a range of values between 40° and 90° is possible for the angle β, which preferably ranges from 50° to 70°. As shown in Figure 3, the guiding fin is at a distance "a" from the outer and at a distance "b" from the inner boundary wall at the outlet of the blower duct 12. The ratio a:b is between 1 and 5 and preferably between 1.5 and 2.5. At its incident edge, the guiding fin 26 is rounded with a radius of curvature R, which may be between 1 and 6 mm and preferably is between 2 mm and 4 mm. In Figure 3, the droplet shape of the guiding fin 26 is indicated; in practical embodiments, it may even be more pronounced. The guiding fin 26 may also have a curved guiding surface, preferably a concave guiding surface on the side, on which the distance is "a" and a convex guiding surface on the side, on which the distance is "b" in Figure 3.

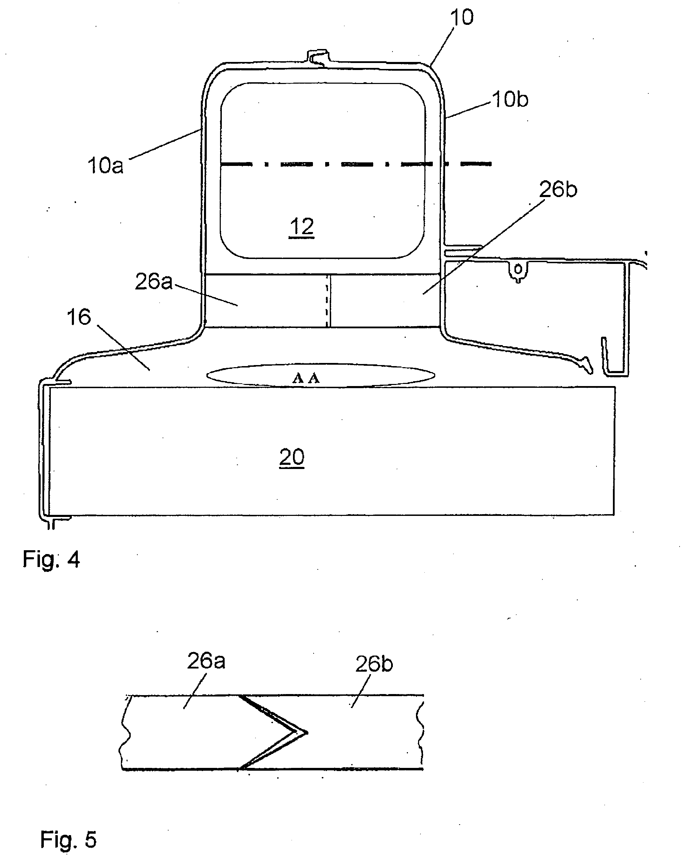

The guiding fin 26 has only a slight, yet decisive effect on the flow of air over the heater 20. In a critical region, which is labelled AA in Figure 4, the incident angle α is enlarged and the flow velocity is reduced. In particular, the air is passed increasingly to the end of the evaporator adjacent to the blower, when the incident angle is larger than 40°. Furthermore, the guiding fin 26 causes certain turbulences, as a result of which the energy of the interfering noises is distributed over a wider frequency range, so that, on the whole, the interfering noises are unobtrusive. The occurrence of particularly disturbing hissing noises is prevented almost completely. In the case of an arrangement, which does not have a guiding fin 26 but otherwise is identical, interfering noises with a noise level of about 10 dB and higher would occur in the frequency range from 3 to 3.5 kHz.

The guiding fin 26 may easily be integrated into existing designs. For the preferred embodiment, the guiding fin is integrally moulded on the housing 10. An embodiment, for which the housing 10 is assembled from two parts 10a, 10b is particularly advantageous, each half 26a, 26b of the guiding fin being integrally moulded on the housing parts 10a or 10b. The free ends of the guiding fin parts are interlocked, preferably positively, as shown in Figure 5.

## Claims

1. Blower / heater combination for a heating, ventilation and air conditioning unit in vehicles, with a spirally shaped blower duct (12) and a housing (10), which accommodates the heater (20) and, especially, an evaporator and is connected with the outlet of the blower duct (12) by a diffuser duct (16), which expands in the direction of the housing, the average flow direction in the diffuser duct (16) forming an acute angle with the air inlet surface of the heater (20) and the heater (20) having blades, plates or flat tubes, wherein, in the outlet of the blower duct (12), a guiding fin (26) is arranged, which provides the air flow, directed towards the air inlet surface of the heater (20), with a component with, in comparison to the acute angle, a greater incident angle with respect to the inlet surface of the heater (20), **characterized in that** the direction of the air inlet surface of the heater crosses the spirally shaped blower duct (12).

2. Blower / heater combination according to claim 1, **characterised in that** the guiding fin (26) is arranged in a region of the outlet of the blower duct (16), in which the direction of flow upstream from the guiding fin (26) forms an angle of less than about 40° with the inlet surface of the heater (20).

3. Blower / heater combination according to claim 2, **characterised in that** the guiding fin (26) provides the air stream with a component with an incident angle with respect to the air inlet surface of the heater (20) ranging from 40° to 90° and preferably from 50° to 70°.

4. Blower / heater combination according to claims 2 or 3, **characterized in that** the guiding fin (26) is at such a distance "a" from the outer and such a distance "b" from the inner boundary wall at the outlet of the blower duct (16), that the ratio a:b is between 1 and 5 and preferably between 1.5 and 2.5.

5. Blower / heater combination according to any of the above claims, **characterised in that** the guiding fin (26) has a rounded incident edge with a radius of curvature ranging from 1 to 6 mm and preferably from 2 to 4 mm.

6. Blower / heater combination according to any of the above claims, **characterised in that** the guiding fin (26) has a drop-shaped profile.

7. Blower / heater combination according to any of the above claims, **characterised in that** the guiding fin (26) has a curved guiding surface.

8. Blower / heater combination according to any of the above claims, **characterized in that** the guiding fin (26) is integrally moulded on the wall of the blower duct.

9. Blower / heater combination according to any of the above claims, **characterised in that** the guiding fin (26) is assembled from two parts, each of which is integrally moulded on one of two housing parts, which form the blower duct (16).

10. The blower / heater combination according to claim 9, **characterised in that** the two parts of the guiding fin (26) are positively interlocked.

## Patentansprüche

1. Kombination aus Gebläse und Wärmetauscher für eine Heizungs-, Belüftungs- und Klimatisierungseinheit in Fahrzeugen mit einem spiralförmigen Gebläsekanal (12) und einem Gehäuse (10), in dem der Wärmetauscher (20) und insbesondere ein Verdampfer untergebracht sind und das über einen sich in der Richtung des Gehäuses aufweitenden Luftrichterkanal (16) mit dem Auslass des Gebläsekanals (12) verbunden ist, wobei die mittlere Strömungsrichtung im Luftrichterkanal (16) mit der Lufteinlassfläche des Wärmetauschers (20) einen spitzen Winkel bildet und der Wärmetauscher (20) Lamellen, Bleche oder Flachrohre hat, wobei im Auslass des Gebläsekanals (12) eine Führungsrippe (26) angeordnet ist, durch die die zur Lufteinlassfläche des Wärmetauschers (20) gelenkte Luftströmung mit einem Bauelement versehen wird, das im Vergleich zum spitzen Winkel einen größeren Einfallswinkel bezüglich der Einlassfläche des Wärmetauschers (20) hat, **dadurch gekennzeichnet, dass** die Richtung der Lufteinlassfläche des Wärmetauschers den spiralförmigen Gebläsekanal (12) kreuzt.

2. Kombination aus Gebläse und Wärmetauscher nach Anspruch 1, **dadurch gekennzeichnet, dass** die Führungsrippe (26) in einem Bereich des Auslasses des Gebläsekanals (16) angeordnet ist, in dem die Richtung der Strömung stromaufwärts von der Führungsrippe (26) einen Winkel von weniger als ungefähr 40° mit der Einlassfläche des Wärmetauschers (20) bildet.

3. Kombination aus Gebläse und Wärmetauscher nach Anspruch 2, **dadurch gekennzeichnet, dass** die Luftströmung durch die Führungsrippe (26) mit einem Bauelement versehen wird, das zu der Lufteinlassfläche des Wärmetauschers (20) einen Einfallswinkel zwischen 40° und 90° und vorzugsweise zwischen 50° und 70° einnimmt.

4. Kombination aus Gebläse und Wärmetauscher nach Anspruch 2 oder 3, **dadurch gekennzeichnet, dass** die Führungsrippe (26) einen solchen Abstand "a" von der äußeren Grenzwand und einen solchen Abstand "b" von der inneren Grenzwand am Auslass des Gebläsekanals (16) hat, dass das Verhältnis a:b zwischen 1 und 5 und vorzugsweise zwischen 1,5 und 2,5 beträgt.

5. Kombination aus Gebläse und Wärmetauscher nach einem der vorhergehenden Ansprüche, **dadurch gekennzeichnet, dass** die Führungsrippe (26) einen abgerundeten Einfallsrand mit einem Krümmungsradius zwischen 1 und 6 mm und vorzugsweise zwischen 2 und 4 mm hat.

6. Kombination aus Gebläse und Wärmetauscher nach einem der vorhergehenden Ansprüche, **dadurch gekennzeichnet, dass** die Führungsrippe (26) ein tropfenförmiges Profil hat.

7. Kombination aus Gebläse und Wärmetauscher nach einem der vorhergehenden Ansprüche, **dadurch gekennzeichnet, dass** die Führungsrippe (26) eine gebogene Führungsfläche hat.

8. Kombination aus Gebläse und Wärmetauscher nach einem der vorhergehenden Ansprüche, **dadurch gekennzeichnet, dass** die Führungsrippe (26) einstückig an der Wand des Gebläsekanals angeformt ist.

9. Kombination aus Gebläse und Wärmetauscher nach einem der vorhergehenden Ansprüche, **dadurch gekennzeichnet, dass** die Führungsrippe (26) aus zwei Teilen zusammengebaut ist, die jeweils einstückig an einem der beiden Gehäuseteile angeformt sind, die den Gebläsekanal (16) bilden.

10. Kombination aus Gebläse und Wärmetauscher nach Anspruch 9, **dadurch gekennzeichnet, dass** die beiden Teile der Führungsrippe (26) formschlüssig verhakt sind.

## Revendications

1. Combinaison de ventilateur / dispositif de chauffage pour un ensemble de chauffage, de ventilation et de climatisation dans des véhicules, avec un canal de ventilateur (12) en forme de spirale et un boîtier (10), qui reçoit le dispositif de chauffage (20), et spécifiquement, un évaporateur, et qui est connecté à la sortie du canal de ventilateur (12) par un canal de diffuseur (16) qui s'étend dans la direction du boîtier, la direction moyenne du flux dans le canal de diffuseur (16) formant un angle aigu avec la surface d'entrée d'air du dispositif de chauffage (20) et le dispositif de chauffage (20) ayant des pales, des plaques ou des tubes plats, une ailette de guidage (26) étant arrangée dans la sortie du canal de ventilateur (12), laquelle fournit le flux d'air, orienté vers la surface d'entrée d'air du dispositif de chauffage (20), avec une composante qui, par comparaison avec l'angle aigu, a un angle incident plus grand par rapport à la surface d'entrée du dispositif de chauffage (20), **caractérisée en ce que** la direction de la surface d'entrée d'air du dispositif de chauffage croise le canal de ventilateur (12) en forme de spirale.

2. Combinaison de ventilateur / dispositif de chauffage selon la revendication 1, **caractérisée en ce que** l'ailette de guidage (26) est arrangée dans une région de la sortie du canal de ventilateur (16) dans laquelle la direction du flux en amont de l'ailette de guidage (26) forme un angle inférieur à environ 40° avec la surface d'entrée du dispositif de chauffage (20).

3. Combinaison de ventilateur / dispositif de chauffage selon la revendication 2, **caractérisée en ce que** l'ailette de guidage (26) confère au courant d'air une composante qui a un angle incident par rapport à la surface d'entrée d'air du dispositif de chauffage (20) qui est compris entre 40° et 90°, et de préférence entre 50° et 70°.

4. Combinaison de ventilateur / dispositif de chauffage selon les revendications 2 ou 3, **caractérisée en ce que** l'ailette de guidage (26) est à une telle distance "a" de la paroi de limitation externe, et à une telle distance "b" de la paroi de limitation interne à la sortie du canal de ventilateur (16), que le rapport a:b est compris entre 1 et 5 et de préférence entre 1,5 et 2,5.

5. Combinaison de ventilateur / dispositif de chauffage selon l'une quelconque des revendications précédentes, **caractérisée en ce que** l'ailette de guidage (26) a un bord incident arrondi avec un rayon de courbure compris entre 1 et 6 mm et de préférence entre 2 et 4 mm.

6. Combinaison de ventilateur / dispositif de chauffage selon l'une quelconque des revendications précédentes, **caractérisée en ce que** l'ailette de guidage (26) a un profil en forme de goutte d'eau.

7. Combinaison de ventilateur / dispositif de chauffage selon l'une quelconque des revendications précédentes, **caractérisée en ce que** l'ailette de guidage (26) a une surface de guidage courbe.

8. Combinaison de ventilateur / dispositif de chauffage selon l'une quelconque des revendications précédentes, **caractérisée en ce que** l'ailette de guidage (26) est moulée intégralement sur la paroi du canal de ventilateur.

9. Combinaison de ventilateur / dispositif de chauffage selon l'une quelconque des revendications précédentes, **caractérisée en ce que** l'ailette de guidage (26) est assemblée à partir de deux pièces, chacune étant moulée intégralement sur l'une de deux pièces de boîtier, qui forment le canal de ventilateur (16).

10. Combinaison de ventilateur / dispositif de chauffage selon la revendication 9, **caractérisée en ce que** les deux pièces de l'ailette de guidage (26) sont emboîtées par engagement positif.
